# EUROPÄISCHE PATENTSCHRIFT

(11) **EP 2 132 589 B1**
(45) Veröffentlichungstag und Bekanntmachung des Hinweises auf die Patenterteilung: **03.08.2011**
(21) Anmeldenummer: 08715782.2
(22) Anmeldetag: 15.02.2008
(51) Int. Cl.: G02B 6/44

(54) **MUFFE FÜR LICHTWELLENLEITER-KABEL**
SLEEVE FOR OPTICAL WAVEGUIDE CABLES
MANCHON POUR CÂBLE DE GUIDES D'ONDE OPTIQUE

(30) Priorität: 01.03.2007 DE 102007010863
(43) Veröffentlichungstag der Anmeldung: 16.12.2009
(73) Patentinhaber: ADC GmbH, 14167 Berlin (DE)
(72) Erfinder: HETZER, Ulrich, 15831 Mahlow (DE); MÖSSNER, Frank, 12277 Berlin (DE); NAD, Ferenc, 14197 Berlin (DE)
(86) Internationale Anmeldenummer: PCT/EP2008/001155
(87) Internationale Veröffentlichungsnummer: WO 2008/104282

(56) Entgegenhaltungen:
- US-A- 5 758 004
- US-A- 5 774 618
- US-A1- 2003 223 725

## Beschreibung

Die Erfindung betrifft eine Muffe für Lichtwellenleiter-Kabel.

Muffen für Lichtwellenleiter-Kabel dienen im Allgemeinen dazu, einzelne Fasern einer oder mehrerer Bündeladern eines Kabels mit einem anderen Kabel zu verbinden, wobei auch Anwendungen möglich sind, wo sämtliche Bündeladern bzw. Fasern des Kabels durch die Muffe nur durchgeschleift werden. Die Muffen weisen üblicherweise ein Gehäuseoberteil und ein Gehäuseunterteil auf, wobei das Gehäuseunterteil auch als End-Plate bezeichnet wird. Das Gehäuseunterteil weist Öffnungen auf, durch die Lichtwellenleiter-Kabel in die Muffe geführt werden können. Die Lichtwellenleiter-Kabel weisen eine Vielzahl von Bündeladern auf. Die Bündelader wiederum besteht aus mindestens zwei Lichtwellenleiter-Fasern mit einer gemeinsamen Ummantelung.

Beim Durchschleifen eines Kabels sind zwei Fälle denkbar. In dem einen Fall wird ein Kabel an einer Stelle abisoliert und in die Muffe geführt. Die Bündeladern werden dazu in der Muffe wieder nach unten zu einer anderen Öffnung geführt und als Kabel mit Isolierung wieder aus der Muffe herausgeführt. Physikalisch handelt es sich dabei bei dem ankommenden und abgehenden Kabel um ein und dasselbe Kabel. Im anderen Fall endet das Kabel an der Muffe und wird mit einem anderen Kabel, das auch an der Muffe endet, verbunden. Hierzu werden die einzelnen Fasern in Spleißkassetten gespleißt, die an einem Trägersystem angeordnet sind.

Neben dem Durchschleifen werden auch einzelne Fasern eines Kabels in der Muffe herausgelöst und mit einer Faser eines anderen Kabels verbunden, wobei die anderen Fasern in dem ursprünglichen Kabel weitergeführt werden. Patentanmeldungen US-A1- 5758004, US-A1 2003/0223725 und US-A1-5774518 zeigen bekannte Muffen für Lichtwellenleiter-Kabeln. Ein Problem in den bekannten Muffen ist die Führung von durchgeschleiften Bündeladern, da diese mit einer gewissen Reservelänge in der Muffe verbleiben müssen, falls diese zu einem späteren Zeitpunkt gespleißt werden sollen. Daher werden die Bündeladern gewickelt und diese Wicklungen in Zwischenräume des Trägersystems gestopft.

Der Erfindung liegt das technische Problem zugrunde, eine Muffe für Lichtwellenleiter-Kabel zu schaffen, die insbesondere eine verbesserte Handhabung der Bündeladern ermöglicht.

Die Lösung des technischen Problems ergibt sich durch den Gegenstand mit den Merkmalen des Anspruchs 1. Weitere vorteilhafte Ausgestaltungen der Erfindung ergeben sich aus den Unteransprüchen.

Hierzu umfasst die Muffe für Lichtwellenleiter-Kabel ein Gehäuseoberteil, ein Gehäuseunterteil, eine Konsole, ein Trägersystem und eine Bündeladerablage, wobei die Konsole mit dem Gehäuseunterteil und dem Trägersystem verbunden ist und das Gehäuseunterteil Öffnungen zur Einführung mindestens eines Lichtwellenleiter-Kabels aufweist. Hierdurch ist es möglich, die Bündeladern, von denen keine Fasern gespleißt werden sollen, definiert zu führen, indem diese zur Bündeladerablage geführt werden, dort deren Reservelänge aufgenommen wird und anschließend die Bündelader wieder zu dem abgebenden Kabel zurückgeführt wird.

Die Bündeladerablage ist auf der Oberseite des Trägersystems angeordnet. Die Oberseite des Trägersystems ist dabei die Seite, die vom Gehäuseunterteil am weitesten entfernt ist.

In einer weiteren bevorzugten Ausführungsform umfasst die Muffe ein Fasermanagement, das mit dem Trägersystem verbunden ist und eine definierte Führung der Lichtwellenleiter-Faser beispielsweise zu Spleißkassetten ermöglicht.

In einer weiteren bevorzugten Ausführungsform ist die Konsole mit dem Gehäuseunterteil lösbar verbunden, weiter vorzugsweise verschraubt.

In einer weiteren bevorzugten Ausführungsform ist das Gehäuseunterteil mehrteilig ausgebildet und/oder mit Sollbruchstellen ausgebildet, so dass Umfangsteile des Gehäuseunterteils unter Einschluss von Umrandungsteilen einer Öffnung entfernbar sind. Dies erlaubt das Auswechseln von defekten Gehäuseunterteilen bzw. einen einfachen nachträglichen Anschluss weiterer Lichtwellenleiter-Kabel. Die Öffnungen selbst sind vorzugsweise ebenfalls durch Elemente des Gehäuseunterteils mit Sollbruchstellen verschlossen, so dass durch diese keine Feuchtigkeit eintritt. Erst wenn dann ein Lichtwellenleiter-Kabel angeschlossen werden soll, wird das Element weggebrochen und das Kabel eingeführt.

In einer weiteren bevorzugten Ausführungsform ist an den Seitenflächen der Konsole mindestens ein Blechwinkel angeordnet, der vorzugsweise eine Soll-Biegestelle aufweist. Dies ermöglicht es, ein angeschlossenes Kabel definiert nach Entfernung der Umfangsteile des Gehäuseunterteils wegzubiegen, dass das Gehäuseunterteil einer vollständig beschalteten Muffe entfernt und ausgetauscht werden kann.

In einer weiteren bevorzugten Ausführungsform ist der oder sind die Blechwinkel mit einem Masseblech verbunden, das auf der Konsole angeordnet ist. Bleckwinkel und Masseblech können dabei einstückig ausgebildet sein oder aber beispielsweise miteinander verschraubt sein.

In einer weiteren bevorzugten Ausführungsform ist an dem Blechwinkel ein Befestigungselement zur Befestigung eines Zentralelementes eines Lichtwellenleiter-Kabels angeordnet.

In einer weiteren bevorzugten Ausführungsform ist die Konsole mit dem Trägersystem verschraubt, beispielsweise über ein Winkelblech. Dies ermöglicht einen weitgehend modularen Aufbau, so dass beispielsweise an eine Konsole unterschiedlich lange Trägersysteme befestigt werden können.

In einer weiteren bevorzugten Ausführungsform umfasst das Trägersystem einen Mittelträger und zwei seitliche Profilträger, wobei der Mittelträger mit der Konsole verbunden ist.

In einer weiteren bevorzugten Ausführungsform ist das Fasermanagement mit dem Mittelträger verbunden, wobei weiter vorzugsweise das Fasermanagement mindestens zweiteilig ausgebildet ist, wobei jeweils der Vorderseite und der Rückseite des Trägersystems eine Faserführung des Fasermanagements zugeordnet ist. Vorzugsweise weisen die Faserführungen des Fasermanagements Anschlagkanten auf, mittels derer das Fasermanagement gegen Profile der Profilträger anschlägt und so gegen Verkippung gesichert ist.

In einer weiteren bevorzugten Ausführungsform bildet das Fasermanagement mindestens an einer Seite des Trägersystems eine seitliche Faserführung zwischen der Vorderseite und der Rückseite. Da üblicherweise an der Vorderseite und der Rückseite des Trägersystems Spleißkassetten angeordnet sind, können so Fasern einfach von einer Seite zu anderen geführt werden und müssen nicht durch das Trägersystem gefädelt werden.

Seitlich am Trägersystem sind Bündeladerführungen angeordnet, mittels derer Bündeladern zur Bündeladerablage geführt und von dort zu Lichtwellenleiter-Kabeln zurückgeführt werden können.
In einer weiteren bevorzugten Ausführungsform sind an einer Seite des Trägersystems die Bündeladerführungen angeordnet und an der gegenüberliegenden Seite die seitliche Faserführung zwischen der Vorderseite und Rückseite des Fasermanagement. Hierdurch wird eine klare Trennung zwischen Faser- und Bündeladerführung erreicht.

In einer weiteren bevorzugten Ausführungsform weist die Bündeladerablage eine zylindrische Form auf.

In einer weiteren bevorzugten Ausführungsform weist die Bündeladerablage eine seitliche Öffnung auf, durch die die Bündeladern ein- und ausführbar sind.

In einer weiteren bevorzugten Ausführungsform ist die Bündeladerablage mit einem abnehmbaren Deckel ausgebildet, so dass die Bündeladern einfach von oben eingelegt werden können.

In einer weiteren bevorzugten Ausführungsform ist im Innern der Bündeladerablage ein Wickelzylinder angeordnet, um den die Bündeladern unter Berücksichtigung der Mindestbiegeradien gewickelt werden können.

In einer weiteren bevorzugten Ausführungsform ist die Bündeladerablage schwenkbar am Trägersystem befestigt. Dies erlaubt bei horizontaler Ausrichtung der Muffe ein Herausschwenken, so dass die Bündeladern einfach von oben eingelegt werden können bzw. zugänglich sind.

Die Erfindung wird nachfolgend anhand eines bevorzugten Ausführungsbeispiels näher erläutert. Die Fig. zeigen:
- Fig. 1: eine perspektivische Vorderansicht einer Muffe für Lichtwellenleiter-Kabel ohne Gehäuseoberteil,
- Fig. 2: eine perspektivische Darstellung einer Konsole mit Masseblech,
- Fig. 3: eine perspektivische Vorderansicht eines Teils des Fasermanagements,
- Fig. 4: eine perspektivische Rückansicht des Teils gemäß Fig. 3,
- Fig. 5: eine perspektivische Seitenansicht des Fasermanagements,
- Fig. 6: eine Draufsicht auf die Muffe bei entfernter Bündeladerablage,
- Fig. 7: eine perspektivische Darstellung einer Bündeladerführung,
- Fig. 8: eine perspektivische Darstellung einer Bündeladerablage,
- Fig. 9: eine perspektivische Darstellung der Bündeladerablage ohne Deckel,
- Fig. 10: eine perspektivische Unteransicht der Bündeladerablage im aufgeschwenkten Zustand und
- Fig. 11: eine Seitenansicht eines Gehäuseoberteils.

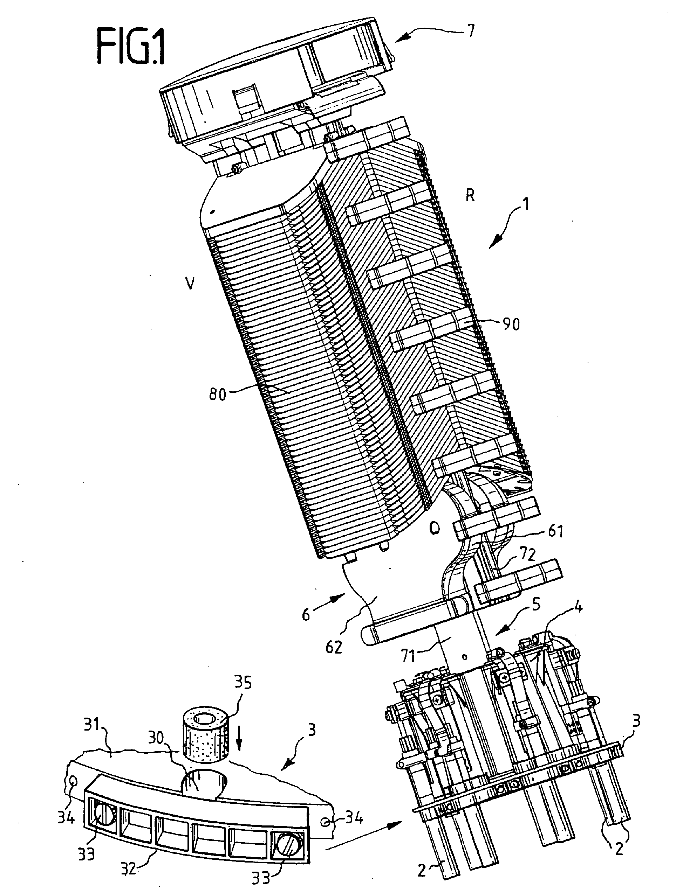

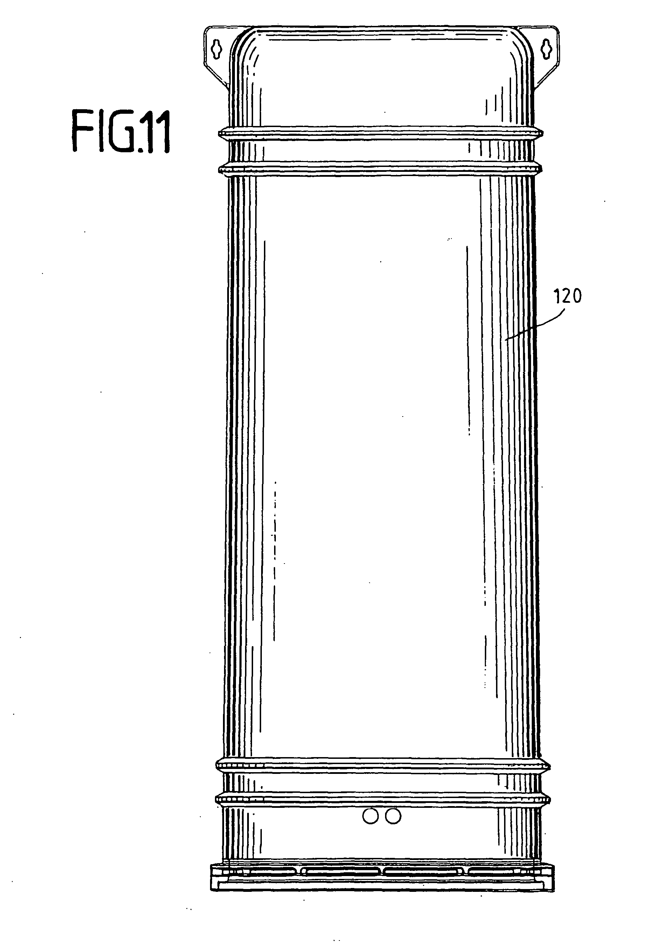

In der Fig. 1 ist eine Muffe 1 für Lichtwellenleiter-Kabel 2 ohne Gehäuseoberteil 120 (siehe Fig. 11) dargestellt. Die Muffe 1 umfasst ein Gehäuseunterteil 3, eine Konsole 4, ein Trägersystem 5, ein Fasermanagement 6 und eine Bündelfaserablage 7. Das Gehäuseunterteil 3 ist mit Öffnungen 30 für Lichtwellenleiter-Kabel 2 ausgebildet, die über Dichtelemente 35 gegen Feuchtigkeit abgedichtet sind. Dabei ist das Gehäuseunterteil 3 mehrteilig ausgebildet, wobei seitliche Umfangsteile 32 des Gehäuseunterteils 3 unter Einschluss von Umrandungsteilen der Öffnungen 30 lösbar an einer Grundplatte 31 befestigt sind, vorzugsweise mittels Schrauben 33, die in Gewinde 34 der Grundplatte 31 geschraubt werden. Vorzugsweise sind so viele Umfangsteile 32 lösbar angeordnet wie Öffnungen 30 für Lichtwellenleiter-Kabel 2 vorgesehen sind, wobei durch jedes Umfangsteil 32 genau eine Öffnung 30 seitlich bzw. radial freigelegt wird.

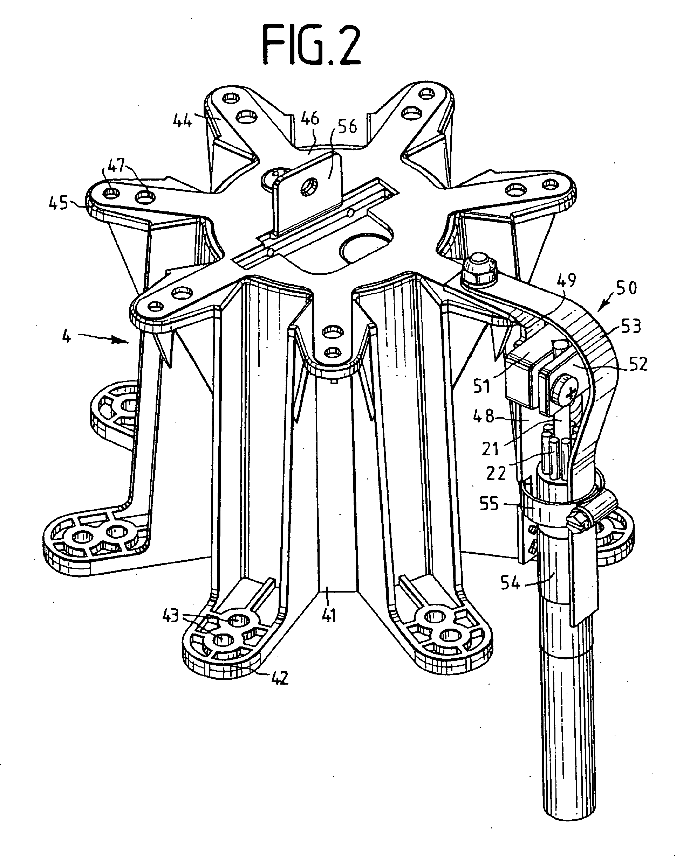

Zunächst soll anhand der Fig. 2 die Anbindung der Lichtwellenleiter-Kabel 2 erläutert werden. Die aus Kunststoff bestehende Konsole 4 weist einen sternförmigen Querschnitt auf und ist an der Unterseite 41 mit Sockelfüßen 42 ausgebildet, die Löcher 43 aufweisen. Durch nicht dargestellte Schrauben kann dann die Konsole 4 mit dem Gehäuseunterteil 3 verschraubt werden. Die Oberseite 44 weist einen runden Mittelbereich auf, von dem sieben Auflagen 45 sternförmig abgehen. Auf der Oberseite 44 ist ein Masseblech mit Löchern 47 ausgebildet, die mit Öffnungen in den Auflagen 45 fluchtend sind. An dem Masseblech 46 ist jeweils ein Blechwinkel 48 angeschraubt, der eine Soll-Biegestelle 49 in Form einer Verjüngung aufweist. An dem Blechwinkel 48 ist ein Befestigungselement 50 zur Fixierung eines Zentralelementes 21 des Lichtwellenleiter-Kabels 2 angeordnet. Das Befestigungselement 50 umfasst eine Backe 51 mit einer Einbuchtung sowie eine verschraubbare Platte 52. Im dargestellten Beispiel ist eine Masseanbindung des Lichtwellenleiter-Kabels 2 durch ein Masseband 53 dargestellt, das mit dem Blechwinkel 48 und der Konsole 4 verschraubt ist. Das Masseband 53 ist dabei derart gebogen, dass es an der dem Blechwinkel 48 gegenüberliegenden Seite an dem Lichtwellenleiter-Kabel 2 anliegt. Eine Masseanbindung bei Lichtwellenleiter-Kabeln 2 kommt meist dann zur Anwendung, wenn diese mit einer Metallfolie als Diffusionsschutz gegen Feuchtigkeit ausgebildet sind. Hierzu wird dann die äußere Ummantelung des Lichtwellenleiter-Kabels 2 teilweise entfernt und die Metallfolie freigelegt. Auf die freigelegte Metallfolie und das Masseband 53 wird dann eine Rollfeder 54 gewickelt, die dann das Masseband 53 federnd gegen die Metallfolie drückt und diese damit dann elektrisch miteinander verbindet (was in Fig. 2 nicht dargestellt ist). Das Masseband 53 ist dann mit dem Blechwinkel 48 und dem Masseblech 46 verschraubt, wobei die Masseverbindung dann über eine nicht dargestellte Verbindung zu den Schrauben 33 des Unterteils 3 nach außen geführt wird. Weiter sind der Blechwinkel 48, das Lichtwellenleiter-Kabel 2 über eine Schelle 55 miteinander mechanisch verbunden, so dass das Lichtwellenleiter-Kabel 2 mechanisch fixiert ist. Des Weiteren sind in der Fig. 2 mehrere Bündeladern 22 dargestellt, die um das Zentralelement 21 angeordnet sind. Bündeladern 22 umfassen mehrere Fasern mit einer gemeinsamen Ummantelung. Aus Übersichtsgründen sind hier die Bündeladern 22 abgeschnitten dargestellt, wohingegen diese tatsächlich nach oben geführt werden. Weiter ist ein Befestigungsschenkel 56 dargestellt, an den ein Mittelträger 71 des Trägersystems 5 angeschraubt wird. Durch die Soll-Biegestelle 49 und die lösbaren Umfangsteile 32 des Gehäuseunterteils 3 kann ein defektes Gehäuseunterteil 3 ausgewechselt werden, ohne Lichtwellenleiter-Verbindungen in der Muffe 1 zu trennen. Hierzu werden die Umfangsteile 32 des Gehäuseunterteils 3 gelöst, wo Lichtwellenleiter-Kabel 2 angeschlossen sind. Anschließend werden die Lichtwellenleiter-Kabel 2 über die Soll-Biegestelle 49 schräg zur Seite weggebogen und das defekte Gehäuseunterteil 3 entfernt. Entsprechend umgekehrt erfolgt die Montage eines neuen Gehäuseunterteils 3.

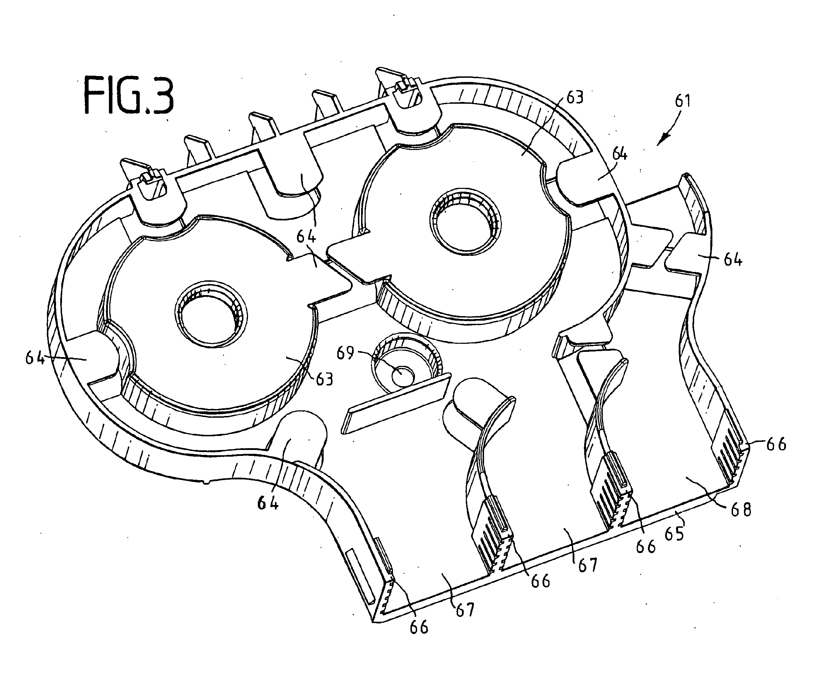

In der Fig. 3 ist eine Faserführung 61 des Fasermanagements 6 dargestellt, das in der Fig. 1 durch eine Abdeckung 62 verdeckt ist. Wie in Fig. 1 dargestellt, ist eine Faserführung 61 an der Vorderseite V des Trägersystems 5 und eine Faserführung 61 an der Rückseite R des Trägersystems 5 angeordnet. Die Faserführung 61 umfasst zwei Spulenkörper 63 sowie mehrere Niederhalter 64. An einer Unterseite 65, die der Konsole 4 zugewandt ist, sind Führungsstege 66 angeordnet, die Führungen 67, 68 bilden. Sollen nun einzelne Fasern einer Bündelader 22 mit einem anderen Lichtwellenleiter-Kabel 2 verbunden werden, so wird die Bündelader geschnitten. Das Ende der Bündeladern wird im Bereich 67 und 68 in einem nicht dargestellten Teil fixiert. Die Fasern, die mit einem anderen Lichtwellenleiter-Kabel 2 verbunden werden sollen, werden über die Führung 68 einer oder mehrerer Spleißkassetten 80 zugeführt, die oberhalb des Fasermanagements 6 an der Vorder- und Rückseite V,R des Trägersystems 5 angeordnet sind. Dabei wird sowohl die hinführende als auch die rückführende Faser in der Führung 68 geführt. Die übrigen Fasern einer Bündelader 22, die nicht mit einem anderen Lichtwellenleiter-Kabel 2 verbunden werden sollen, sondern durchgeschleift werden, werden in die Führung 67 geführt. Dort wird die notwendige Reservelänge bzw. Spleißreserve auf die Spulenkörper 63 gewickelt und anschließend diese Fasern aus der anderen Führung 67 zum Lichtwellenleiter-Kabel 2 zurückgeführt. Mittig weist die Faserführung 61 eine Öffnung 69 auf, durch die die Faserführung 61 an dem Mittelträger 71 des Trägersystems 5 verschraubt werden kann.

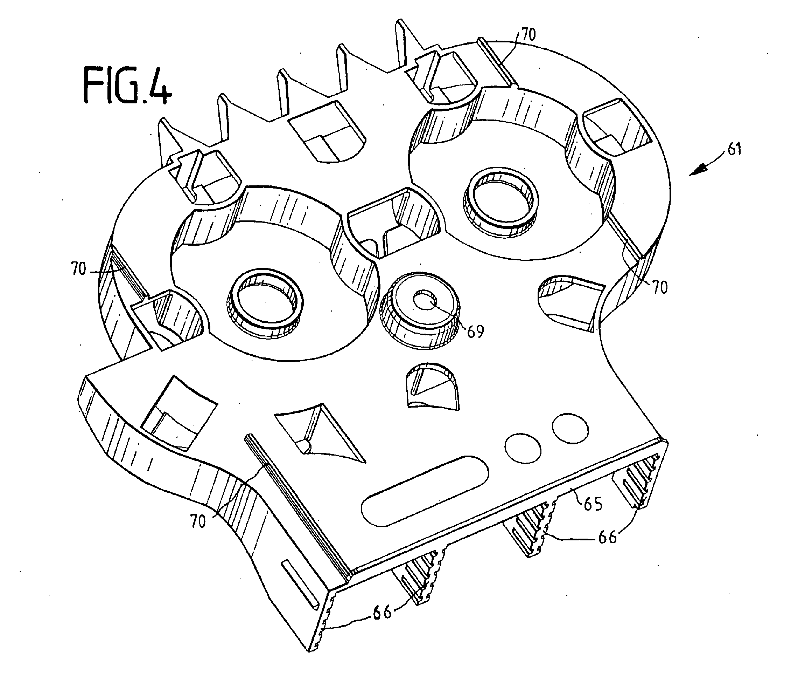

In der Fig. 4 ist die Rückseite der Faserführung 61 dargestellt, die an dem Trägersystem 5 anliegt. Dabei weist die Faserführung 61 vier Anschlagkanten 70 auf, die gegen Kanten des Trägersystems 5 anschlagen und so ein Verkippen der Faserführung 61 verhindern.

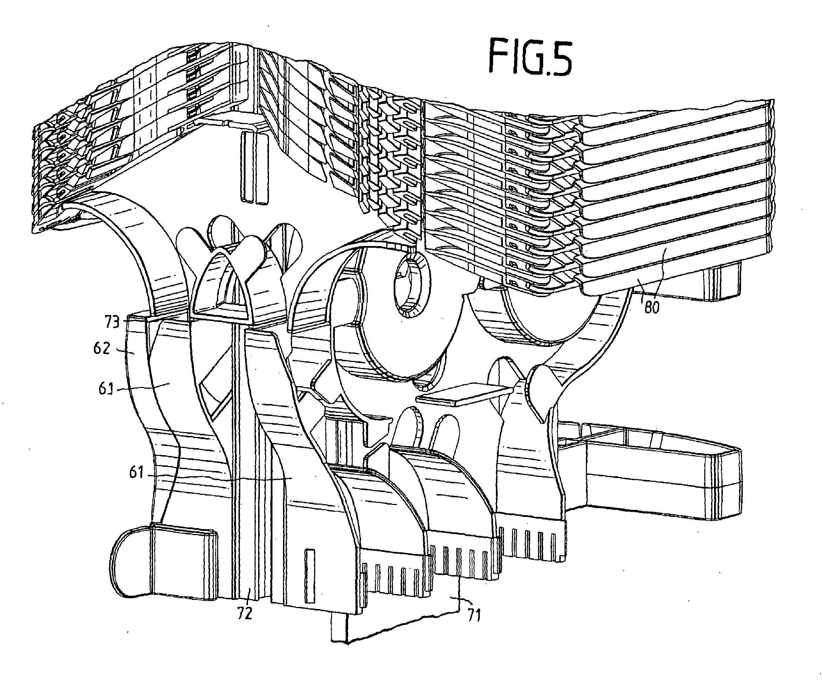

In Fig. 5 ist das Fasermanagement 6 in einer Seitenansicht dargestellt. An dem Mittelträger 71 des Trägersystems 5 sind die beiden Faserführungen 61 für die Vorder- und Rückseite V,R verschraubt, wobei die Anschlagkanten 70 gegen Anschlagkanten zweier Profilträger 72 anschlagen, die mit dem Mittelträger 71 verbunden sind, wobei in der Darstellung der hinteren Profilträger 72 verdeckt ist. Seitlich auf der Oberseite 73 der Faserführungen 61 für die Vorder- und Rückseite V,R ist eine seitliche Faserführung 74 angeordnet, die ein seitliches rangieren der Fasern von der Vorderseite V zur Rückseite R der Muffe 1 erlaubt. Die seitliche Faserführung 74 kann dabei ein separates Bauteil sein oder aber jeweils hälftig einstückig mit den Faserführungen 61 für die Vorder- und Rückseite V,R verbunden sein.

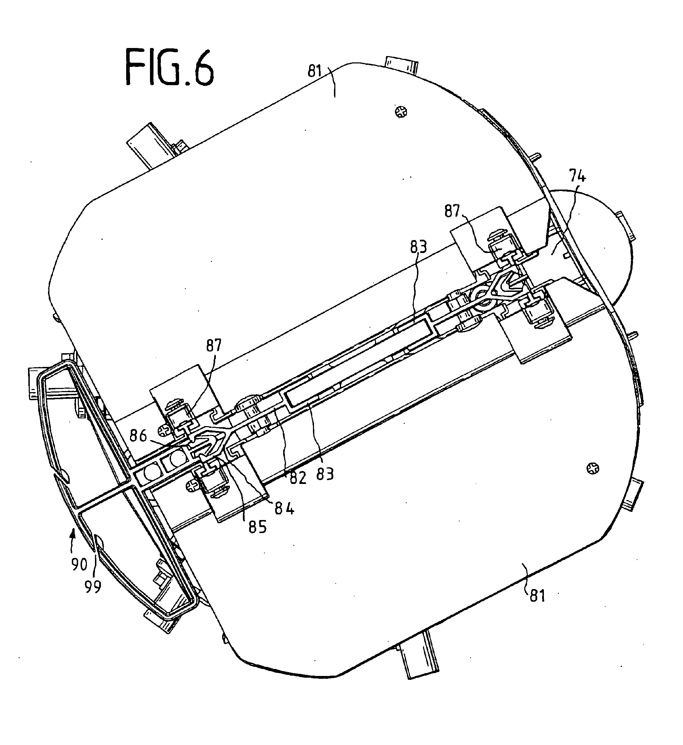

In der Fig. 6 ist eine Draufsicht auf die Muffe 1 bei entfernter Bündeladerablage 7 dargestellt. Dabei sind Abdeckungen 81 für die Spleißkassetten 80 dargestellt. Die Profilträger 72 weisen einen mittleren plattenförmigen Bereich 82 auf, an den sich ein U-förmiger Bereich 83 anschließt. An der anderen Seite schließt sich ein Bereich 84 an, der zunächst V-förmig ausgebildet ist, wobei dann die Schenkel 85 parallel verlaufen und nach innen gerichtete Abwinklungen 86 aufweisen. Auf die Profilträger 72 werden die Spleißkassetten 80 von oben aufgeschoben. Über die letzte, oberste Spleißkassette 80 wird dann die Abdeckung 81 geschoben und über verschraubbare Stopper 87 fixiert. In den Bereich 84 des linken Profilträgers sind Bündeladerführungen 90 eingesteckt. An dem anderen Profilträger 72 ist beispielsweise die seitliche Faserführung 74 eingesteckt.

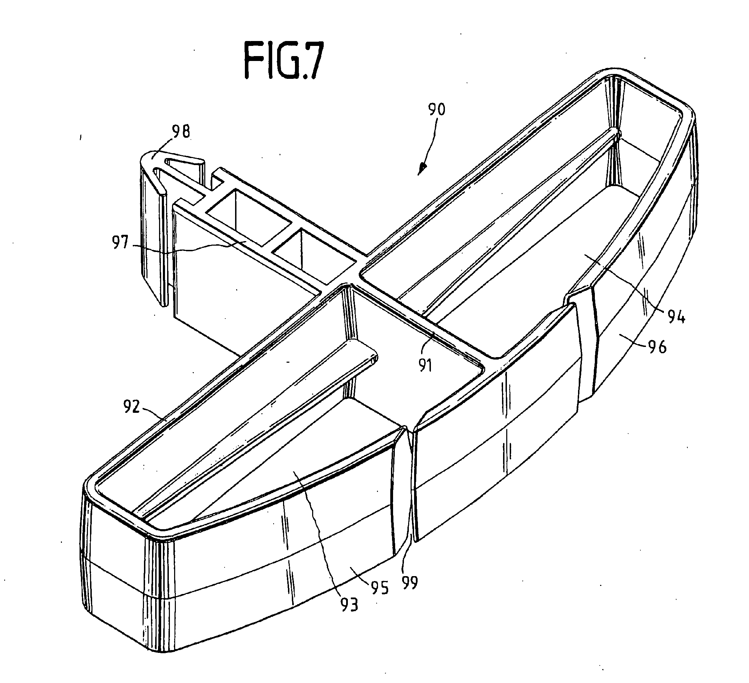

Die Bündeladerführung 90 umfasst einen Mittelsteg 91, der eine äußere Umrandung 92 in zwei Führungen 93, 94 unterteilt (siehe Fig. 7). Dabei ist die äußere Umrandung 92 an jeweils einer der Führungen 93, 94 mit einem Freischnitt 99 ausgebildet, so dass die Teile 95, 96 der äußeren Umrandung 92 federnd sind. Dies erlaubt die seitliche Einführung der Bündeladern 22. In der Verlängerung des Mittelstegs 91 ist die Bündeladerführung 90 mit einem Schaft 97 ausgebildet, an dessen Ende ein pfeilförmiger Ansatz 98 angeordnet ist. Wird dann die Bündeladerführung 90 in den Profilträger 72 gesteckt, so verrastet der pfeilförmige Ansatz 98 hinter der Abwinkelung 86 des Profilträgers 72. Durch die Ausbildung mit zwei Führungen 93, 94 kann eine klar getrennte Aufteilung der zur Bündeladerablage 7 hinführenden und der rückführenden Bündeladern 22 erreicht werden.

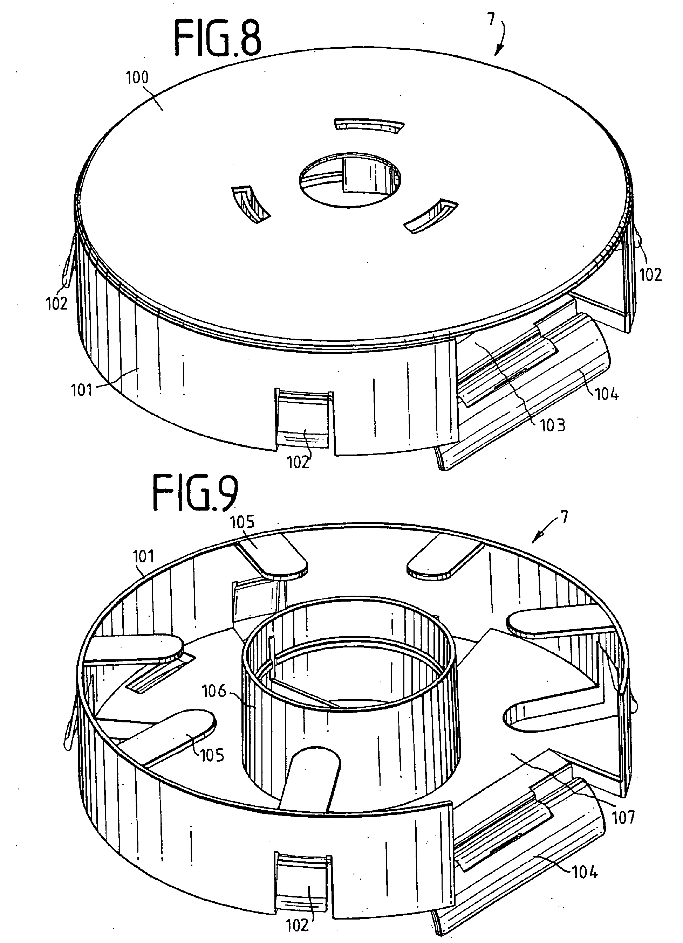

In der Fig. 8 ist die Bündeladerablage 7 dargestellt. Die Bündeladerablage 7 weist eine im Wesentlichen zylindrische Form auf, die nach oben hin von einem abnehmbaren Deckel 100 verschlossen ist. Aus der Mantelfläche 101 sind drei federnde Abstützungen 102 freigeschnitten, die federnd gegen das übergestülpte Gehäuseoberteil 120 drücken und so die Bündeladerablage 7 stabilisieren. Des Weiteren weist die Bündeladerablage 7 eine Öffnung 103 auf, unterhalb derer eine Abrundung 104 angeordnet ist.

In der Fig. 9 ist die Bündeladerablage 7 ohne Deckel 100 dargestellt. An den Innenseiten der Mantelfläche 101 sind Niederhalter 105 angeordnet. Weiter ist mittig ein Wickelzylinder 106 auf einer Bodenfläche 107 angeordnet. Die Bündeladern 22 werden durch die Bündeladerführungen 90 zur Bündeladerablage 7 geführt und durch die Öffnung 103 eingelegt, um den Wickelzylinder 106 gewickelt und anschließend durch die Öffnung 103 wieder herausgeführt. Die Bündeladerablage 7 erlaubt somit eine zentrale, geordnete Ablage von Reservelängen nicht geschnittener Bündeladern 22, die nur durch die Muffe 1 durchgeschleift werden.

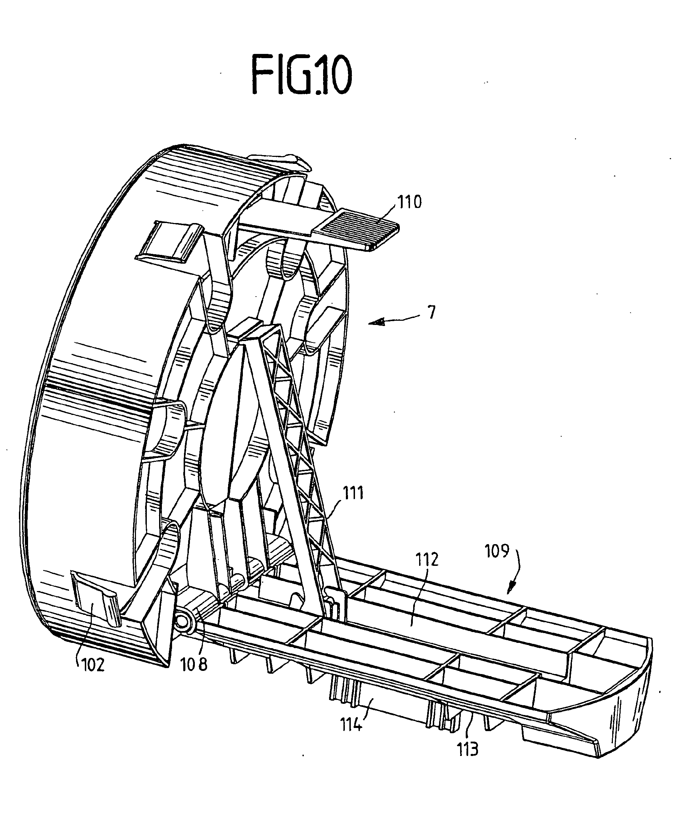

In der Fig. 10 ist die Bündeladerablage 7 in einem aufgeschwenkten Zustand dargestellt. Die Bündeladerablage 7 ist hierzu über ein Schwenklager 108 um ca. 90° zu einem Unterteil 109 schwenkbar. Das Unterteil 109 ist mit dem Trägersystem 5 verrastet. An der Unterseite ist die Bündeladerablage mit einem Rasthaken 110 ausgebildet, der in der Grundposition (siehe Fig. 1) mit dem Unterteil 109 verrastet. In der aufgeschwenkten Position wird die Bündeladerablage 7 durch eine eingerastete Stützstrebe 111 gehalten und gegen das Unterteil 109 abgestützt. Die Stützstrebe 111 taucht in der Grundposition in eine Aufnahme 112 ein. Mittels einer an einer Unterseite 113 des Unterteils 109 angeordneten Steckschiene 114 kann dann das Unterteil 109 mit der Bündeladerablage 7 auf die Oberseite des Trägersystems 5 gesteckt werden, wobei die Steckschiene 114 zwischen die beiden U-förmigen Bereiche 83 der Profilträger 72 einrastet.

In der Fig. 11 ist eine Seitenansicht eines Gehäuseoberteils 120 dargestellt, das von oben auf die Muffe 1 gestützt wird und mit dem Gehäuseunterteil 3 verbunden wird.

### Bezugszeichenliste

- 1: Muffe
- 2: Lichtwellenleiter-Kabel
- 3: Gehäuseunterteil
- 4: Konsole
- 5: Trägersystem
- 6: Fasermanagement
- 7: Bündelfaserablage
- 21: Zentralelement
- 22: Bündelader
- 30: Öffnung
- 31: Grundplatte
- 32: Umfangsteil
- 33: Schraube
- 34: Gewinde
- 35: Dichtelement
- 41: Unterseite
- 42: Sockelfüße
- 43: Löcher
- 44: Oberseite
- 45: Auflagen
- 46: Masseblech
- 47: Löcher
- 48: Blechwinkel
- 49: Soll-Biegestelle
- 50: Befestigungselement
- 51: Backe
- 52: Platte
- 53: Masseband
- 54: Rollfeder
- 55: Schelle
- 56: Befestigungsschenkel
- 61: Faserführung Vorderseite/Rückseite
- 62: Abdeckung
- 63: Spulenkörper
- 64: Niederhalter
- 65: Unterseite
- 66: Führungsstege
- 67, 68: Führungen
- 69: Öffnung
- 70: Anschlagkanten
- 71: Mittelträger
- 72: Profilträger
- 73: Oberseite
- 74: seitliche Faserführung
- 80: Spleißkassette
- 81: Abdeckungen
- 82: plattenförmiger Bereich
- 83: U-förmiger Bereich
- 84: V-förmiger Bereich
- 85: Schenkel
- 86: Abwinklungen
- 87: Stopper
- 90: Bündeladerführungen
- 91: Mittelsteg
- 92: Umrandung
- 93, 94: Führungen
- 95, 96: Teile
- 97: Schaft
- 98: pfeilförmiger Ansatz
- 99: Freischnitt
- 100: Deckel
- 101: Mantelfläche
- 102: Abstützungen
- 103: Öffnung
- 104: Abrundung
- 105: Niederhalter
- 106: Wickelzylinder
- 107: Bodenfläche
- 108: Schwenklager
- 109: Unterteil
- 110: Rasthaken
- 111: Stützstrebe
- 112: Aufnahme
- 113: Unterseite
- 114: Steckschiene
- 120: Gehäuseoberteil
- V: Vorderseite
- R: Rückseite

## Patentansprüche

1. Muffe (1) für Lichtwellenleiter-Kabel (2), umfassend ein Gehäuseoberteil (120), ein Gehäuseunterteil (3), eine Konsole (4), ein Trägersystem (5) und eine Bündeladerablage (7), wobei die Konsole (4) mit dem Gehäuseunterteil (3) und dem Trägersystem (5) verbunden ist und das Gehäuseunterteil (3) Öffnungen (30) zur Einführung mindestens eines Lichtwellenleiter-Kabels (2) aufweist, **dadurch gekennzeichnet, dass**
die Bündeladerablage (7) auf der Oberseite des Trägersystems (5) angeordnet ist, wobei seitlich am Trägersystem (5) Bündeladerführungen (90) angeordnet sind, mittels derer Bündeladern (22) zur Bündeladerablage (7) geführt und von dort zu Lichtwellenleiter-Kabeln (2) zurückgeführt werden können.

2. Muffe nach Anspruch 1, **dadurch gekennzeichnet, dass** die Muffe (1) ein Fasermanagement (6) umfasst, das mit dem Trägersystem (5) verbunden ist.

3. Muffe nach einem der Ansprüche 1 oder 2, **dadurch gekennzeichnet, dass** die Konsole (4) mit dem Gehäuseunterteil (3) lösbar verbunden ist.

4. Muffe nach Anspruch 3, **dadurch gekennzeichnet, dass** das Gehäuseunterteil (3) mehrteilig ausgebildet und/oder mit Sollbruchstellen ausgebildet ist, so dass Umfangsteile (32) des Gehäuseunterteils (3) unter Einschluss von Umrandungsteilen einer Öffnung (30) für die Lichtwellenleiter-Kabel (2) entfernbar sind.

5. Muffe nach einem der vorangegangenen Ansprüche, **dadurch gekennzeichnet, dass** an den Seitenflächen der Konsole (4) mindestens ein Blechwinkel (48) angeordnet ist.

6. Muffe nach Anspruch 5, **dadurch gekennzeichnet, dass** der Blechwinkel (48) eine Soll-Biegestelle (49) aufweist.

7. Muffe nach einem der Ansprüche 5 oder 6, **dadurch gekennzeichnet, dass** der oder die Blechwinkel (48) mit einem Masseblech (46) verbunden sind, das auf der Oberseite (44) der Konsole (4) angeordnet ist.

8. Muffe nach einem der Ansprüche 5 bis 7, **dadurch gekennzeichnet, dass** an dem Blechwinkel (48) ein Befestigungselement (50) zur Befestigung eines Zentralelementes (21) eines Lichtwellenleiter-Kabels (2) angeordnet ist.

9. Muffe nach einem der vorangegangenen Ansprüche, **dadurch gekennzeichnet, dass** die Konsole (4) mit dem Trägersystem (5) verschraubt ist.

10. Muffe nach einem der vorangegangenen Ansprüche, **dadurch gekennzeichnet, dass** das Trägersystem (5) einen Mittelträger (71) und zwei seitliche Profilträger (72) umfasst, wobei der Mittelträger (71) mit der Konsole (4) verbunden ist.

11. Muffe nach Anspruch 10, **dadurch gekennzeichnet, dass** das Fasermanagement (6) mit dem Mittelträger (71) verbunden ist.

12. Muffe nach einem der vorangegangenen Ansprüche, **dadurch gekennzeichnet, dass** das Fasermanagement (6) mindestens zweiteilig ausgebildet ist, wobei jeweils der Vorderseite und der Rückseite des Trägersystems (5) eine Faserführung (61) des Fasermanagements (6) zugeordnet ist.

13. Muffe nach Anspruch 12, **dadurch gekennzeichnet, dass** das Fasermanagement (6) mindestens an einer Seite des Trägersystems (5) eine seitliche Faserführung (74) zwischen der Vorderseite und Rückseite bildet.

14. Muffe nach einem der vorangegangenen Ansprüche, **dadurch gekennzeichnet, dass** an einer Seite des Trägersystems (5) die Bündeladerführungen (90) angeordnet sind und an der gegenüberliegenden Seite die Faserführung (74) zwischen der Vorderseite und Rückseite des Fasermanagements (6) angeordnet ist.

15. Muffe nach einem der vorangegangenen Ansprüche, **dadurch gekennzeichnet, dass** die Bündeladerablage (7) eine zylindrische Form aufweist.

16. Muffe nach einem der vorangegangenen Ansprüche, **dadurch gekennzeichnet, dass** die Bündeladerablage (7) mindestens eine seitliche Öffnung (103) aufweist.

17. Muffe nach einem der vorangegangenen Ansprüche, **dadurch gekennzeichnet, dass** die Bündeladerablage (7) mit einem abnehmbaren Deckel (100) ausgebildet ist.

18. Muffe nach einem der vorangegangenen Ansprüche, **dadurch gekennzeichnet, dass** im Innern der Bündeladerablage (7) ein Wickelzylinder (106) angeordnet ist.

19. Muffe nach einem der vorangegangenen Ansprüche, **dadurch gekennzeichnet, dass** die Bündeladerablage (7) schwenkbar am Trägersystem (5) befestigt ist.

## Claims

1. A sleeve (1) for optical waveguide cables (2), comprising a housing upper part (120), a housing lower part (3), a console (4), a carrier system (5) and a bundle core repository (7), the console (4) being connected to the housing lower part (3) and the carrier system (5), and the housing lower part (3) having openings (30) for inserting at least one optical waveguide cable (2) **characterized in that** the bundle core repository (7) is arranged on the upper side of the carrier system (5), wherein bundle core guides (90) are arranged laterally on the carrier system (5), by means of which bundle core guides (90) bundle cores (22) can be guided to the bundle core repository (7) and, from there, guided back to optical waveguide cables (2).

2. Sleeve according to Claim 1, **characterized in that** the sleeve (1) comprises a fiber management unit (6), which is connected to the carrier system (5).

3. Sleeve according to either of Claims 1 and 2, **characterized in that** the console (4) is connected detachably to the housing lower part (3).

4. Sleeve according to Claim 3, **characterized in that** the housing lower part (3) is designed to have two or more parts and/or to have desired breaking points, with the result that circumferential parts (32) of the housing lower part (3), including edge parts of an opening (30) for the optical waveguide cables (2), can be removed.

5. Sleeve according to one of the preceding claims, **characterized in that** at least one angled sheet-metal part (48) is arranged on the side faces of the console (4).

6. Sleeve according to Claim 5, **characterized in that** the angled sheet-metal part (48) has a desired bending point (49).

7. Sleeve according to either of Claims 5 and 6, **characterized in that** the angled sheet-metal part(s) (48) are connected to a ground plate (46), which is arranged on the upper side (44) of the console (4).

8. Sleeve according to one of Claims 5 to 7, **characterized in that** a fixing element (50) for fixing a central element (21) of an optical waveguide cable (2) is arranged on the angled sheet-metal part (48).

9. Sleeve according to one of the preceding claims, **characterized in that** the console (4) is screwed to the carrier system (5).

10. Sleeve according to one of the preceding claims, **characterized in that** the carrier system (5) comprises a central carrier (71) and two lateral profiled carriers (72), the central carrier (71) being connected to the console (4).

11. Sleeve according to Claim 10, **characterized in that** the fiber management unit (6) is connected to the central carrier (71).

12. Sleeve according to one of the preceding claims, **characterized in that** the fiber management unit (6) is designed to have at least two parts, in each case the front side and the rear side of the carrier system (5) having an associated fiber guide (61) of the fiber management unit (6).

13. Sleeve according to Claim 12, **characterized in that** the fiber management unit (6) forms, at least on one side of the carrier system (5), a lateral fiber guide (74) between the front side and the rear side.

14. Sleeve according to one of the preceding claims, **characterized in that** the bundle core guides (90) are arranged on one side of the carrier system (5), and the fiber guide (74) is arranged on the opposite side, between the front side and the rear side of the fiber management unit (6).

15. Sleeve according to one of the preceding claims, **characterized in that** the bundle core repository (7) has a cylindrical shape.

16. Sleeve according to one of the preceding claims, **characterized in that** the bundle core repository (7) has at least one lateral opening (103).

17. Sleeve according to one of the preceding claims, **characterized in that** the bundle core repository (7) is designed to have a removable cover (100).

18. Sleeve according to one of the preceding claims, **characterized in that** a winding cylinder (106) is arranged in the interior of the bundle core repository (7).

19. Sleeve according to one of the preceding claims, **characterized in that** the bundle core repository (7) is fixed pivotably to the carrier system (5).

## Revendications

1. Manchon (1) pour câbles de guide d'ondes optiques (2), comprenant une partie supérieure de boîtier (120), une partie inférieure de boîtier (3), une console (4), un système de support (5) et un support de réception de faisceau de fibres (7), la console (4) étant connectée à la partie inférieure de boîtier (3) et au système de support (5), et la partie inférieure de boîtier (3) présentant des ouvertures (30) pour introduire au moins un câble de guide d'ondes optiques (2),
**caractérisé en ce que**
le support de réception de faisceau de fibres (7) est disposé sur le côté supérieur du système de support (5), des guides de faisceau de fibres (90) étant disposés latéralement sur le système de support (5), au moyen desquels des faisceaux de fibres (22) sont guidés vers le support de réception de faisceau de fibres (7) et peuvent être ramenés de là à des câbles de guide d'ondes optiques (2).

2. Manchon selon la revendication 1, **caractérisé en ce que** le manchon (1) comprend une unité de gestion de fibres (6), qui est connectée au système de support (5).

3. Manchon selon l'une quelconque des revendications 1 ou 2, **caractérisé en ce que** la console (4) est connectée de manière amovible à la partie inférieure de boîtier (3).

4. Manchon selon la revendication 3, **caractérisé en ce que** la partie inférieure de boîtier (3) est réalisée en plusieurs parties et/ou est réalisée avec des points destinés à la rupture, de sorte que des parties périphériques (32) de la partie inférieure de boîtier (3), incluant des parties de bord d'une ouverture (30) pour les câbles de guide d'ondes optiques (2), puissent être enlevées.

5. Manchon selon l'une quelconque des revendications précédentes, **caractérisé en ce qu'**au moins une cornière en tôle (48) est disposée sur les faces latérales de la console (4).

6. Manchon selon la revendication 5, **caractérisé en ce que** la cornière en tôle (48) présente un point de flexion (49).

7. Manchon selon l'une quelconque des revendications 5 ou 6, **caractérisé en ce que** la ou les cornières (48) sont connectées à une tôle de masse (46) qui est disposée sur le côté supérieur (44) de la console (4).

8. Manchon selon l'une quelconque des revendications 5 à 7, **caractérisé en ce qu'**un élément de fixation (50) pour la fixation d'un élément central (21) d'un câble de guide d'ondes optiques (2) est disposé sur la cornière en tôle (48).

9. Manchon selon l'une quelconque des revendications précédentes, **caractérisé en ce que** la console (4) est vissée au système de support (5).

10. Manchon selon l'une quelconque des revendications précédentes, **caractérisé en ce que** le système de support (5) comprend un support central (71) et deux supports profilés latéraux (72), le support central (71) étant connecté à la console (4).

11. Manchon selon la revendication 10, **caractérisé en ce que** l'unité de gestion de fibres (6) est connectée au support central (71).

12. Manchon selon l'une quelconque des revendications précédentes, **caractérisé en ce que** l'unité de gestion de fibres (6) est réalisée au moins en deux parties, un guide de fibres (61) de l'unité de gestion de fibres (6) étant associé à chaque fois au côté avant et au côté arrière du système de support (5) .

13. Manchon selon la revendication 12, **caractérisé en ce que** l'unité de gestion de fibres (6) forme au moins d'un côté du système de support (5) un guide de fibres latéral (74) entre le côté avant et le côté arrière.

14. Manchon selon l'une quelconque des revendications précédentes, **caractérisé en ce que** d'un côté du système de support (5) sont disposés les guides de faisceau de fibres (90) et sur le côté opposé, le guide de fibres (74) est disposé entre le côté avant et le côté arrière de l'unité de gestion de fibres (6).

15. Manchon selon l'une quelconque des revendications précédentes, **caractérisé en ce que** le support de réception de faisceau de fibres (7) présente une forme cylindrique.

16. Manchon selon l'une quelconque des revendications précédentes, **caractérisé en ce que** le support de réception de faisceau de fibres (7) présente au moins une ouverture latérale (103).

17. Manchon selon l'une quelconque des revendications précédentes, **caractérisé en ce que** le support de réception de faisceau de fibres (7) est réalisé avec un couvercle amovible (100).

18. Manchon selon l'une quelconque des revendications précédentes, **caractérisé en ce qu'**à l'intérieur du support de réception de faisceau de fibres (7) est disposé un cylindre d'enroulement (106).

19. Manchon selon l'une quelconque des revendications précédentes, **caractérisé en ce que** le support de réception de faisceau de fibres (7) est fixé de manière pivotante sur le système de support (5).
